# EUROPÄISCHE PATENTSCHRIFT

(11) **EP 2 312 332 B1**
(45) Veröffentlichungstag und Bekanntmachung des Hinweises auf die Patenterteilung: **19.12.2012**
(21) Anmeldenummer: 09075465.6
(22) Anmeldetag: 15.10.2009
(51) Int. Cl.: G01S 5/02, H04B 1/16

(54) **Verfahren zur Detektion mindestens eines Objektes und Funkknotennetz**
Method for detecting at least one object and radio node network
Procédé de détection d'au moins un objet et réseau de noeuds radio

(43) Veröffentlichungstag der Anmeldung: 20.04.2011
(73) Patentinhaber: Fraunhofer-Gesellschaft zur Förderung der angewandten Forschung e.V., 80686 München (DE)
(72) Erfinder: Meier, Fritz, 90429 Nürnberg (DE); Gehrmann, Volker, 91054 Erlangen (DE); Milosiu, Heinrich, 91080 Uttenreuth (DE); Roth, Maximilian, 90403 Nürnberg (DE); Münch, Ulli, 90459 Nürnberg (DE); Pflaum, Alexander Dr., 91052 Erlangen (DE)
(74) Vertreter: Pfenning, Meinig & Partner GbR

(56) Entgegenhaltungen:
- US-A1- 2005 215 280
- US-B1- 6 812 838
- DURANTE M S ET AL: "An Ultra Low Power Wakeup Receiver for Wireless Sensor Nodes" SENSOR TECHNOLOGIES AND APPLICATIONS, 2009. SENSORCOMM '09. THIRD INTERNATIONAL CONFERENCE ON, IEEE, PISCATAWAY, NJ, USA, 18. Juni 2009 (2009-06-18), Seiten 167-170, XP031516692 ISBN: 978-0-7695-3669-9

## Beschreibung

Die Erfindung betrifft ein Verfahren zur Detektion mindestens eines Objektes mit mindestens einer vorgegebenen Eigenschaft aus einer Mehrzahl von mit Funkknoten versehenen Objekten sowie ein Funkknotennetz mit einer Mehrzahl von Funkknoten, die jeweils Objekten zugeordnet sind.

In Funkknotennetzen, auch Sensorknotennetze genannt, werden unter anderem einzelne Funkknoten Objekten zugeordnet, wobei die Funkknoten üblicherweise jeweils eine Sender-Empfängeranordnung und eine Energieversorgungseinheit als elektronisches Bauteil umfassen. Die Sender-Empfängeranordnungen senden Informationen bezüglich der Objekte an eine zentrale Einheit oder auch eine mobile Funkeinheit oder empfangen von diesen Informationen. Im Betrieb verbrauchen diese Sende-Empfängeranordnungen relativ viel Energie, so dass es im Stand der Technik bekannt ist, beispielsweise unter Verwendung von Standard-Funkempfängern mit integriertem PLL-Synthesizer ein sogenanntes "Polling" zu benutzen, um Energie zu sparen. Dabei werden die Empfänger nur zu bestimmten Zeitpunkten und für eine kurze Zeit über sogenannte Zeitschlitze (timeslots) aktiviert, so dass in dieser Zeit die Kommunikation abgewickelt werden kann. Danach wird der Empfänger wieder abgeschaltet. Empfänger, die mit Polling arbeiten, reduzieren auf der einen Seite den Stromverbrauch, erhöhen aber mit abnehmendem duty cycle bzw. Tastverhältnis, bei dem die Zeitschlitze zeitlich gesehen weiter auseinander gezogen sind, aber gleichermaßen die Reaktions- oder Latenzzeit eines Funkknotens, was für viele Anwendungen nicht tolerierbar ist.

Es sind sogenannte stromsparende Empfänger bekannt, die sich beispielsweise als Superregenerativ- oder Detektorempfänger realisieren lassen. Die erzielbaren Stromaufnahmen liegen bei einigen 100 µA und die Empfindlichkeiten sind moderat bis niedrig, so dass solche Empfänger insbesondere für eine Kommunikation mit niedrigen Datenraten geeignet sind. Unter Berücksichtigung dieser Eigenschaften werden stromsparende Empfänger auch als Aktivierungsempfänger oder auch als sogenannte Aufweckempfänger in einem System von Funkknoten eingesetzt, wobei die Funkknoten in einem Ruhezustand sind und der stromsparende Empfänger kontinuierlich empfängt, und erst nach der Dekodierung spezieller Aktivierungssignale den Funkknoten aktiviert. Durch den kontinuierlichen Empfang ist eine unmittelbare Reaktion mit sehr deutlich niedrigerer Latenzzeit als mit dem sogenannten "Polling" möglich.

Neben den oben beschriebenen zu Funkknotennetzen kombinierten aktiven Funkknoten gibt es sogenannte passive oder semi-passive Funkknoten, bei denen über ein extern gesendetes Signal gleichzeitig Leistungen übermittelt werden. Solche Funkknoten verwenden sogenannte passive RFID-Tags als induktive Vorrichtungen, die von einem ebenfalls induktiven Interrogator, das Informationen über ein magnetisches Feld sendet bzw. empfängt, aus diesem Magnetfeld ihre benötigte Energie gewinnen. Dabei werden alle sich im Nahfeld des Interrogators befindliche RFID-Einheiten eingesprochen bzw. eingeschaltet.

Güter, wie zum Beispiel Maschinen, müssen aufgrund von Vorschriften in regelmäßigen Abständen gewartet werden. Wenn solche Geräte mit einem aktiven Funkknoten versehen sind, der einen Aufweckempfänger und eine stromzehrende Sende-Empfangseinheit umfasst, können die mit den Funkknoten versehen Maschinen von einem Wartungstechniker mithilfe eines mobilen mit Sende-Empfangseinheiten versehenen Interrogators hinsichtlich ihrer Funktionsfähigkeit überprüft werden. Im Stand der Technik werden somit über das Interrogator des Wartungstechnikers die Aufweckempfängern aller Funkknoten angesprochen, die die stromzehrenden Sende-Empfangseinheiten der Funkknoten aufwecken, die dann alle die angeforderten Informationen an das Interrogator senden.

US 2005/0215280 A1 offenbart ein Netzwerk aus einer Mehrzahl von Funkknoten, die jeweils einen Aufweckempfänger und eine vom Aufweckempfänger zu aktivierende Sende-Empfangseinheit aufweisen. Der Aufweckempfänger speichert mindestens eine Identifikation, die eine Eigenschaft, ein Attribut oder eine Klasse repräsentieren kann, und wenn ein Funksignal empfangen wird, wird dessen Inhalt mit der Identifikation verglichen und gegebenenfalls ein Aufwecksignal an die Sende-Empfangseinheit geliefert.

Die Veröffentlichugn "An ultra-low power Wakeup Receiver for Wireless Sensor Nodes" of Durante et al, SensorComm 2009.34, Seiten 167 - 170, ISBN 978-0-7695-3669-9/09, beschreibt einen RF Aufweckempfänger, mit niedriger Leistung für Sensornetzknoten.

Der Erfindung liegt die Aufgabe zugrunde, in einem Funkknotennetz, bei dem die Funkknoten Objekten zugeordnet sind, ein Verfahren zur Detektion eines Objektes mit mindestens einer vorgegebenen Eigenschaft aus einer Mehrzahl von mit Funkknoten versehenen Objekten sowie ein derartiges Funknetz zu schaffen, bei dem der Funkknoten des gewünschten Objektes selektiv angesprochen werden kann und das ausgewählte Objekt bzw. der Funkknoten signalisieren kann, dass er angesprochen ist.

Diese Aufgabe wird erfindungsgemäß durch die Merkmale des unabhängigen Verfahrensanspruchs und des unabhängigen Vorrichtungsanspruchs gelöst.

Durch die in den Unteransprüchen angegebenen Maßnahmen sind vorteilhafte Weiterbildungen und Verbesserungen möglich.

Dadurch, dass in einem Funkknotennetz die jeweiligen mit Objekten verbundenen Funkknoten stromsparende Empfängerschaltungen als sogenannten Aufweckempfänger verwenden und diese stromsparenden vorzugsweise analogen Empfängerschaltungen mit einem Speicher versehen sind, die zumindest zeitweise eine gesonderte und mindestens einer vorgegebenen Eigenschaft des Objektes zugeordnete Aktivierungssequenz speichern und wobei von einem Sender die gesonderte Aktivierungssequenz gesendet wird, die von der jeweiligen stromsparenden Empfängerschaltung bzw. dem Aufweckempfänger empfangen und auf Übereinstimmung mit der im Speicher gespeicherten Aktivierungssequenz geprüft wird, kann bei Übereinstimmung selektiv nur der Funkknoten aktiviert werden, in dessen Empfängerschaltung die gesonderte Aktivierungssequenz gespeichert ist.

Das erfindungsgemäße Verfahren bzw. das erfindungsgemäße Funkknotennetz ermöglicht ein schnelles selektives Erkennen von einzelnen Objekten bzw. Funkknoten, die eine besondere Eigenschaft haben. Dabei kann die besondere bzw. vorgegebene Eigenschaft das Erfordernis einer Wartungsarbeit, eine Betriebsmittelprüfung, einer Kalibrierung oder Reparatur sein oder der Ablauf einer Betriebserlaubnis, die Zugehörigkeit zu einer Warengruppe oder vieles mehr. Es werden die Suchzeiten des Wartungspersonals verkürzt und Prozessabläufe mit dem Ziel der Kostensenkung optimiert. Durch die Nutzung der Aufweckfunktion eines stromsparenden, batteriegestützten Aufweckempfängers können Betriebsdauern von mehreren Jahren erreicht werden. Das Verfahren eignet sich besonders für sehr große drahtlose Netze und bei geforderten hohen Betriebsdauern mit geringem Wartungsaufwand für das drahtlose Netzwerk, insbesondere bei Batteriebetrieb.

In vorteilhafter Weise können mehrere gesonderte Aktivierungssequenzen in der Empfängerschaltung gespeichert werden, denen unterschiedliche vorgegebene Eigenschaften zugeordnet werden. Somit ist es möglich, unterschiedliche Merkmalsausprägungen bzw. Eigenschaften eines Objektes bzw. Funkknotens anzusprechen, so dass alle Prozessabläufe, die im Zusammenhang mit den Objekten vorgegeben sind, gesteuert werden können.

In einer bevorzugten Ausführungsform umfassen die Funkknoten optische und/oder akustische Signalisierungsmittel, die bei Aktivierung des oder der Funkknoten durch die gesonderte Aktivierungssequenz eingeschaltet werden. Dadurch wird dem Wartungspersonal bzw. dem Nutzer sofort die Position des Objektes angezeigt.

In einem weiteren verbesserten Ausführungsbeispiel kann unter Nutzung des Funkknotennetzwerkes der aktivierte bzw. angesprochene Funkknoten funkgestützt lokalisiert werden, so dass bei der Abfrage der vorgegebenen Eigenschaft eines Funkknoten nicht zeitgleich eine Person in der Nähe sein muss, um die Signalisierung des Funkknotens wahrzunehmen.

Vorzugsweise kann die optische und/oder akustische Signalisierung zeitlich begrenzt werden und/oder durch erneutes Aussenden der Aktivierungssequenz beendet werden. Durch diese Maßnahme, die auch als "Toggle-Funktion" bezeichnet wird, kann der Signalisierungsvorgang vorzeitig beendet werden. Dadurch kann die Betriebsdauer des Funkknotens erhöht werden und der dann kurzzeitig anfallende Strommehrbedarf trägt nur unwesentlich zum mittleren Stromverbrauch bei.

Bei einem vorteilhaften Ausführungsbeispiel kann auch ein Signalisierungssignal vom Funkknoten selbst über eine dann vorgesehenen Sendeeinheit gesendet werden, die die Position des Objekts bzw. des Funkknotens, die in der Speichereinheit gespeichert sein muss, sendet. Auch in diesem Fall muss keine Person zur Wahrnehmung des Signalisierungssignals zeitgleich mit dem Abfragevorgang nach der vorgegebenen Eigenschaft vorhanden sein.

Gemäß der Erfindung wird die gesonderte Aktivierungssequenz erstmalig für eine Speicherung in der Empfängerschaltung des Funkknotens von einem Sender, der auch der Abfragesender sein kann, mit einer entsprechenden Kennung gesendet, wenn dem Funkknoten, bzw. dem damit verbundenen Objekt die vorgegebene Eigenschaft zugeordnet werden soll. In entsprechender Weise kann eine Änderung der gesonderten Aktivierungssequenz vorgenommen werden. Dadurch können neu zugewiesene Merkmale in einem Programmiervorgang selektiv zentral vorgenommen werden. Auch kann bei Änderung der zugewiesenen Merkmale kann eine entsprechende Reprogrammierung durchgeführt werden.

Die gesonderte Aktivierungssequenz kann jeweils von einer Bedienperson über einen mobilen Sender, von einem Sender einer zentralen Erfassungs- und Überwachungseinrichtung, aber auch von einer mit dem Funkknoten verbundenen oder auf dem Funkknoten befindlichen Sensorik ausgelöst und zugeordnet werden.

Die Funkknoten des erfindungsgemäßen Funkknotennetzes weisen mindestens die stromsparende Empfängerschaltung mit einer Speichervorrichtung und mit Mitteln zur Feststellung der Übereinstimmung der gesonderten Aktivierungssequenz mit einer von einem Sender gesendeten Aktivierungssequenz sowie Mittel zur Signalisierung auf. Dabei können die Mittel zur Signalisierung als optische und/oder akustische Anzeigemittel ausgebildet sein, aber auch eine Sendeeinheit umfassen.

Das erfindungsgemäße Verfahren bzw. das erfindungsgemäße Funkknotennetz unterstützt die Einhaltung von Sicherheitsrichtlinien und ermöglicht beispielsweise ein schnelles Erkennen von abgelaufenen Betriebserlaubnissen und anderen Merkmalsausprägungen und reduziert Stillstandszeiten von Gütern. Es wird keine aktive Infrastruktur eines drahtlosen Netzwerks, wie z.B. eines WLANs benötigt und es ist kein aktives, synchronisiertes Funknetzwerk erforderlich.

Es wird ein neues Verfahren für die Logistik/Asset-Management angeboten, das stromsparend ausgeführt werden kann (10 µA - Aufweckempfänger). Unter einer immensen Anzahl von Funkknoten (z.B. mehr als 1000) ist es nun möglich, den Funkkanal nur minimal zu belegen und als defekt markierte Assets selektiv anzusprechen. Dazu muss nicht erst das gesamte Netzwerk aufgebaut werden. Die Schwierigkeiten bei einer RFID Pulkerfassung entfallen.

Es können beliebig viele (z.B. mehr als tausend) Assets mit je einem Aufweckempfänger, Batterie und einem optischen/akustischen Signalgeber als Minimalkonfiguration vorgesehen werden, wobei eine Sendeeinheit bzw. ein Interrogator ein spezifisches Signal zum selektiven Ansprechen der jeweiligen Assets bzw. der jeweiligen Aufweckempfänger der Objekte aussendet. Die optische/akustische Signalgebung der Assets mit besonderer Eigenschaft nach dem selektiven Aufwecken ausgelöst.

Ein Ausführungsbeispiel eines erfindungsgemäßen Funkknotennetzes ist in der Zeichnung dargestellt und wird in der nachfolgenden Beschreibung zusammen mit dem erfindungsgemäßen Verfahren näher erläutert. Es zeigen
- Fig. 1: eine schematische Darstellung eines Funk- knotennetzes, bei dem ausgewählten Funkkno- ten von einem Interrogator ausgewählt wer- den sollen und
- Fig. 2: das Funkknotennetz nach Fig. 1 im signali- sierenden Zustand.

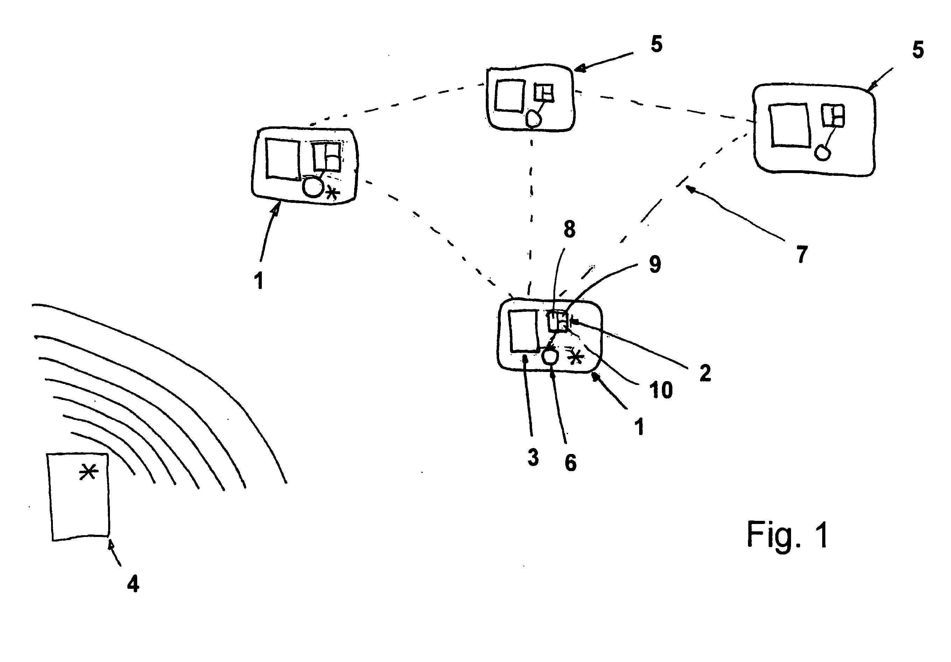

In Fig. 1 ist das erfindungsgemäße Funkknotennetz dargestellt und es weist eine Mehrzahl von Funkknoten 1, 5 auf, die beispielsweise an Maschinen oder Geräten oder Gütern angebracht sind, wobei in der Figur nur vier Funkknoten dargestellt sind, die Anzahl kann jedoch auch im zweistelligen, dreistelligen oder auch vierstelligen Bereich liegen. In dem dargestellten Ausführungsbeispiel weist der Funkknoten 1, 5 eine Sende- und Empfangseinheit 3 für ein drahtloses Netzwerk 7, eine stromsparende, vorzugsweise analoge Empfängerschaltung, die im Folgenden als Aufweckempfänger 2 bezeichnet wird, und eine Signalisierungseinheit 6 auf. Weiterhin ist ein einen Sender aufweisendes Interrogator 4 vorgesehen, der Informationen an die Aufweckempfänger 2 senden.

Die Aufweckempfänger 2, die insbesondere für eine Kommunikation mit niedrigen Datenraten, z.B. Datenraten kleiner oder gleich 1 kbps geeignet sind, umfassen ein Empfangsteil 8, das die von einem Sender gesendeten Daten mit niedriger Bitrate, die auf ein HF-Trägersignal vorzugsweise mit Amplitudenumtastung aufmoduliert sind, empfängt. Das Empfangsteil 8 zeichnet sich dadurch aus, dass es ein sehr einfach gehaltener Empfänger, d.h. solcher mit geringem Schaltungsaufwand und reduzierter Empfindlichkeit sowie reduzierter Selektivität ist. Durch den Verzicht auf komplexe Schaltungen und aufwendige Modulationstechniken wird der Energieverbrauch des Empfängers reduziert und liegt im Bereich von 5 µA bis 100 µA. Eine niedrige Datenrate von beispielsweise 0,1 kbps begünstigt eine Implementierung des Empfängers mit ggf. noch niedrigerem Stromverbrauch.

Die Daten mit niedriger Bitrate entsprechen einer Aktivierungssequenz, die in dem Empfangsteil zu einer Empfangsbitfolge demoduliert wird.

Der Aufweckempfänger 2 der Funkknoten 1, 5 weist außerdem einen Speicher 9 auf, in dem mindestens eine Aktivierungssequenz gespeichert ist. Im Falle eines Funkknotennetzes nach Fig. 1, bei dem zusätzlich zu dem Aufweckempfänger 2, eine aufwendigere Sende-Empfangseinheit 3 höherer Leistung vorgesehen ist, die von dem Aufweckempfänger 2 aufgeweckt werden soll, umfasst die Aktivierungssequenz mindestens die Information der Identität des Funkknotens und diejenige, dass der Funkknoten aufgeweckt werden soll. Schließlich weist der Aufweckempfänger 2 noch Mittel 10 zur Feststellung der Übereinstimmung einer Empfangsbitfolge bzw. einer empfangenen Aktivierungssequenz mit der in dem Speicher 9 gespeicherten Aktivierungssequenz auf. Diese Mittel 10 zur Feststellung der Übereinstimmung können als eine Korrelatoreinheit oder auch als einfache Vergleichseinheit ausgebildet sein, die als digitale oder analoge Logik aufgebraut sind.

Wie oben ausgeführt wurde, sind die Funkknoten 1, 5 einem Objekt, beispielsweise einer Maschine zugeordnet, das bzw. die bestimmte Merkmalsausprägungen haben kann. Als Beispiel sei eine Maschine genannt, die in regelmäßigen Abständen gewartet werden muss. Die Merkmalsausprägung ist somit beispielsweise der Hinweis, dass die Maschine wartungsbedürftig ist. Um dem Wartungspersonal die Möglichkeit zu geben, eine oder mehrere wartungsbedürftige Maschine(n) aus einer Vielzahl von Maschinen herauszufinden, wird dem Erfordernis der Wartungsarbeit eine gesonderte Aktivierungssequenz zugeordnet. Diese gesonderte Aktivierungssequenz wird gleichfalls in dem Speicher 9 gespeichert. Selbstverständlich können mehrere gesonderte Aktivierungssequenzen für unterschiedliche Merkmalsausprägungen bzw. Eigenschaften der Maschine oder des Objekts vorgesehen werden, die in dem Speicher 9 gespeichert sind. In Fig. 1 sind die gesonderten Eigenschaften eines Funkknotens 1 mit einem Stern dargestellt.

Der Funkknoten gemäß Fig. 1 weist eine Signalisierungseinheit 6 auf, die mit dem Aufweckempfänger in Wirkverbindung steht, wobei diese Wirkverbindung eine Leitung sein kann. Die Signalisierungseinheit kann unterschiedlicher Natur sein, sie kann beispielsweise eine optische oder akustische Anzeigeeinheit sein. Dabei ist im einfachsten Fall die optische Anzeigeeinheit eine LED und die akustische Anzeigeeinheit ein Buzzer oder Piepser, die optische Anzeigeeinheit kann jedoch auch ein Display oder dergleichen sein. Schließlich kann die Signalisierungseinheit auch eine Funksendeeinheit sein, die Bestandteil des Aufweckempfängers 2 oder auch der Sende- und Empfangseinheit 3 sein kann. Diese Sendeeinheit sendet dann gegebenenfalls ein Signalisierungssignal an eine entsprechende Empfängereinheit, die mobil sein kann oder in einer zentralen Verarbeitungseinheit enthalten ist.

In Fig. 1 ist der Aufweckvorgang der Funkknoten 1 durch den Interrogator 4 angedeutet. Die gesonderte Aktivierungssequenz, die der Merkmalsausprägung oder besonderen Eigenschaft des Objekts zugeordnet ist, wird von dem Interrogator (als Stern angedeutet) als Funksignal gesendet und von allen Aufweckempfängern 2 aller Funkknoten 1, 5 empfangen. Die Abfragemöglichkeit über den Interrogator 4 kann durch den Nutzer bzw. das Wartungspersonal zu einem beliebigen Zeitpunkt wahrgenommen werden, bei einer automatisierten Abfrage, die zentral oder von einem direkt im Netzwerk vorhandenen fest installierten Interrogator 4 vorgenommen werden kann, kann in regelmäßigen Intervallen durchgeführt werden.

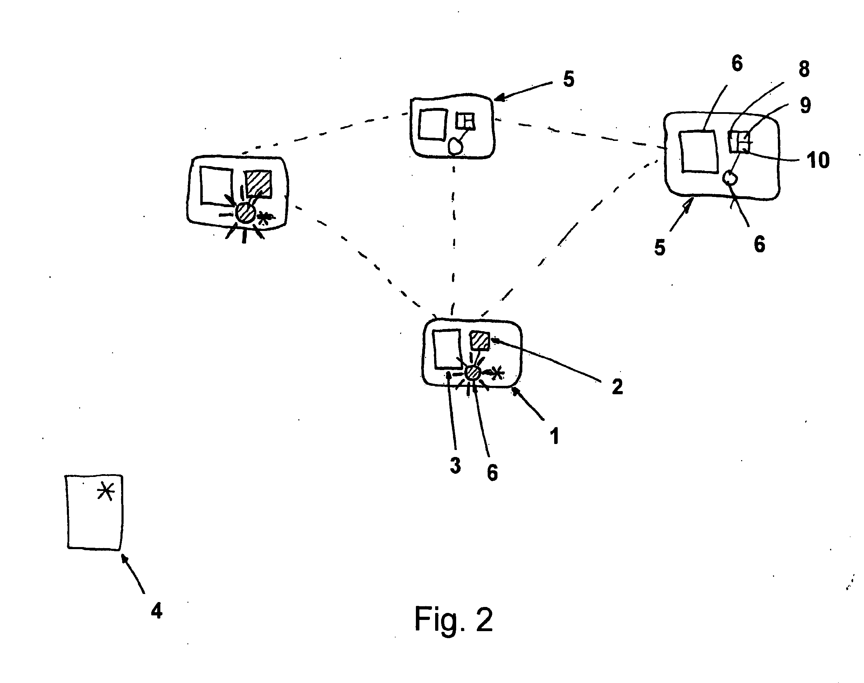

Die Aufweckempfänger 2 demodulieren das Signal und die der gesonderten Aktivierungssequenz zugeordnete Empfangsbitfolge, gegebenenfalls nach vorheriger Bearbeitung, wird von den Mitteln 10 zur Feststellung der Übereinstimmung geprüft, wobei die jeweils in dem Speicher 9 gespeicherte gesonderte Aktivierungssequenz verwendet wird. Stimmt die Empfangsbitfolge mit der im Speicher 9 gespeicherten gesonderten Aktivierungssequenz überein, geben die Mittel 10 zur Feststellung der Übereinstimmung ein Signal an die Signalisierungseinheit, wodurch beispielsweise ein optisches Signalisierungssignal, z.B. in Form einer blinkenden LED oder ein akustisches Signal als Positionsanzeige abgegeben wird. Dies ist in Fig. 2 gezeigt, in der die Funkknoten 1 mit besonderer Merkmalsausprägung durch die aktivierte Signalisierungseinheit angezeigt werden. Gleichzeitig kann der Funkknoten insgesamt aufgeweckt werden, d.h. es wird ein Aufwecksignal an die zugehörige Sende- und Empfangseinheit abgegeben.

Die Lokalisierung der ausgewählten Funkknoten 1 wird im beschriebenen Fall durch das Wartungspersonal vorgenommen, das die optische oder akustische Signalisierung an dem Funkknoten des Objekts feststellt. Falls eine automatisierte Abfrage vorgenommen wird, kann von der Sende-Empfangseinheit 3 eine gespeicherte Positionsangabe an eine zentrale Einheit gesandt werden. In einem anderen Ausführungsbeispiel, bei dem eine Positionsangabe nicht gespeichert werden muss, kann unter Verwendung des drahtlosen Netzwerks ein funkgestütztes Lokalisierungsverfahren vorgenommen werden. Dabei wird über ausgebrachte feststehende, ein Signal sendende Anker (auch Beacon genannt), die ihre eigene Position kennen, abhängig von den Empfangsfeldstärken am Funkknoten dessen relative Position in dem aufgespannten Koordinatensystem der Anker bzw. Sender bestimmt.

Weist das Gerät oder das Objekt z.B. nach Wartungsarbeiten die besondere Merkmalsausprägung oder Eigenschaft nicht mehr auf, so kann die gespeicherte gesonderte Aktivierungssequenz über den Interrogator 4 oder eine zentrale Einheit wieder entfernt werden. Dies wird durch Programmiersignale vorgenommen, die ähnlich der Aktivierungssequenz auf einen HF-Träger aufmoduliert und gesendet werden. Selbstverständlich kann auch eine Reprogrammierung vorgenommen werden, bei der eine neue gesonderte Aktivierungssequenz gespeichert wird. Beispielweise kann eine Markierung als defektes Asset auf zwei Arten vorgenommen werden, nämlich über ein aktiviertes drahtloses Sensornetzwerk mit einem Propagieren über das Sensornetzwerkprotokoll oder nur über den Aufweckempfänger, wobei der Aufweckempfänger über ein Zusatzkommando direkt angesprochen wird. In beiden Verfahren muss eine Asset-ID bzw. eine Funkknoten-Identifikation zugewiesen sein.

Die oder einzelne Funkknoten 1, 5 und/oder die zugeordneten Objekte können mit Sensoren oder einer Sensoranordnung versehen sein, die gesonderten Eigenschaften des Objektes erfassen. In diesem Fall wird bei Detektion einer vorgegebenen Eigenschaft durch einen Sensor ein Signal an den Funkknoten gegeben, der abhängig von der detektierten besonderen Eigenschaft eine gesonderte Aktivierungssequenz in seiner Speichereinheit speichert. Als Beispiel sei eine Temperaturüberwachung von Lebensmitteln genannt, die in einem Behältnis als Objekt aufgenommen sind, das mit einem Funkknoten verbunden ist. Ein Temperatursensor misst ein Überschreiten einer vorgegebenen Temperaturgrenze und setzt die Eigenschaft "verdorben" (defekt). Wenn eine Abfrage über den Zustand der Lebensmittel in einem Behältnis, üblicherweise in einer Vielzahl von Behältnissen vorgenommen werden soll, wird eine Abfrage z.B. über den Interrogator 4 durch Aussenden der gesonderten Aktivierungssequenz gestartet und alle Funkknoten 1 der Behältnisse, deren Temperaturprofil eine Regelverletzung verursacht hat und entsprechend die gesonderte Aktivierungssequenz initiiert hat, werden über den Aufweckempfänger 2 aufgeweckt und geben ein Signalisierungssignal ab.

In dem oben beschriebenen Ausführungsbeispiel nach Fig. 1 und Fig. 2 sind die Funkknoten 1, 5 mit Sende-Empfangseinheiten 3 höhere Leistungen versehen. In einem anderen Ausführungsbeispiel eines Funkknotennetzes können ausgewählte oder alle Funkknoten nur mit den Aufweckempfängern 2 bestückt sein, wobei jedoch in diesem Fall die Leistungsfähigkeit des nur mit einem Aufweckempfänger 2 versehenen Funkknotens beschränkt ist.

## Patentansprüche

1. Verfahren zur selektiven Detektion mindestens eines Objektes mit mindestens einer vorgegebenen Eigenschaft aus einer Mehrzahl von mit Funkknoten (1, 5) versehenen Objekten, wobei die Funkknoten (1, 5) Bestandteil eines Funkknotennetzes sind und jeder mit einem Objekt verbundene Funkknoten eine stromsparende Empfängerschaltung (2) mit einem Speicher (9) aufweist, in dem eine oder mehrere Aktivierungssequenz en gespeichert werden, wobei bei dem Objekt mit der vorgegebenen Eigenschaft zumindest eine Aktivierungssequenz eine gesonderte Aktivierungssequenz ist, die der vorgegebenen Eigenschaft zugeordnet wird, wobei die gesonderte Aktivierungssequenz im Falle einer gewünschten Detektion von einem Sender (4) mit einem Funksignal gesendet wird, das von der jeweiligen Empfängerschaltung (2) der Funkknoten (1, 5) empfangen wird, die die empfangene gesonderte Aktivierungssequenz unter Verwendung der einen oder mehrerer gespeicherten Aktivierungssequenz en auf Übereinstimmung überprüft und bei Übereinstimmung den Funkknoten (1) des Objektes mit der vorgegebenen Eigenschaft aktiviert, **dadurch gekennzeichnet, dass** die mindestens eine gesonderte Aktivierungssequenz für eine Speicherung in der Empfängerschaltung (2) des Funkknotens (1, 5) von dem Sender (4) oder einem weiteren Sender mit einer entsprechenden Kennung gesendet wird, wenn dem Funkknoten bzw. dem damit verbundenen Objekt die vorgegebene Eigenschaft zugeordnet werden soll.

2. Verfahren nach Anspruch 1, **dadurch gekennzeichnet, dass** der oder die aktivierten Funkknoten (1) optisch und/oder akustisch signalisiert werden.

3. Verfahren nach Anspruch 1 oder 2, **dadurch gekennzeichnet, dass** der durch die mindestens eine vorgegebene Aktivierungssequenz aktivierte Funkknoten (1) funkgestützt lokalisiert wird.

4. Verfahren nach einem der Ansprüche 1 bis 3, **dadurch gekennzeichnet, dass** mehrere gesonderte Aktivierungssequenzen in der Empfängerschaltung (2) gespeichert werden, denen unterschiedliche vorgegebene Eigenschaften zugeordnet werden.

5. Verfahren nach einem der Ansprüche 2 bis 4, **dadurch gekennzeichnet, dass** die optische und/oder akustische Signalisierung zeitlich begrenzt wird und/oder durch erneutes Aussenden der Aktivierungssequenz beendet wird.

6. Verfahren nach einem der Ansprüche 1 bis 5, **dadurch gekennzeichnet, dass** die mindestens eine gesonderte Aktivierungssequenz für eine Speicherung in der Empfängerschaltung (2) des Funkknotens (1, 5) abhängig von Signalen einer Sensoranordnung gespeichert wird, die die vorgegebene Eigenschaft des Objektes detektiert

7. Verfahren nach einem der Ansprüche 1 bis 6, **dadurch gekennzeichnet, dass** die gesonderte Aktivierungssequenz über einen Programmiervorgang gespeichert wird, wobei der Programmiervorgang über den Sender (4) von einem Nutzer oder von einer zentralen Einheit ausgelöst wird, die gegebenenfalls Funksignale von den Funkknoten empfängt, wobei die Funksignale Informationen über die gesonderte Eigenschaft der Objekte beinhalten, die von einer mit den Objekten in Wirkverbindung stehenden Sensoranordnung geliefert werden oder wobei der Programmiervorgang von der Sensoranordnung ausgelöst wird.

8. Funkknotennetz mit einer Mehrzahl von Funkknoten (1, 5), die jeweils Objekten zugeordnet sind und jeweils eine stromsparende Empfängerschaltung (2) aufweisen und mit mindestens einem Sender (4) zum Aussenden von Aktivierungssequenzen, wobei die Empfängerschaltung eine Speichervorrichtung (9), in der zumindest zeitweise mindestens eine gesonderte Aktivierungssequenz gespeichert ist, die einer vorgegebenen Eigenschaft des Objektes zugeordnet ist, und Mittel (10) zur Feststellung der Übereinstimmung der gesonderten Aktivierungssequenz mit der gesendeten Aktivierungssequenz aufweist und weiterhin der Funkknoten (1, 5) Mittel (6) zur Signalisierung umfasst, die mit den Mitteln (10) zur Feststellung der Übereinstimmung in Wirkverbindung stehen, wobei die Mittel (10) zur Feststellung der Übereinstimmung ausgebildet sind, ein Signal an die Mittel (6) zur Signalisierung zu liefern, wenn eine Übereinstimmung der in der Speichervorrichtung (9) gespeicherten gesonderten Aktivierungssequenz mit der gesendeten Aktivierungssequenz feststellbar ist, **dadurch gekennzeichnet, dass** der Sender (4) oder ein weiterer Sender ausgebildet sind, mit einer entsprechenden Kennung die mindestens eine gesonderte Aktivierungssequenz für eine Speicherung in der Empfängerschaltung (2) des Funkknotens zu senden, wenn diesem Funkknoten bzw. dem damit verbundenen Objekt die vorgegebene Eigenschaft zugeordnet werden soll.

9. Funkknotennetz nach Anspruch 8, **dadurch gekennzeichnet, dass** der Sender (4) Bestandteil einer Sende/Empfangsvorrichtung eines Lese- und/oder Programmiergerätes ist.

10. Funkknotennetz nach Anspruch 8 oder 9, **dadurch gekennzeichnet, dass** die Mittel (6) zu Signalisierung als optische und/oder akustische Anzeigemittel ausgebildet sind.

11. Funkknotennetz nach einem der Ansprüche 8 bis 10, **dadurch gekennzeichnet, dass** die Mittel (6) zur Signalisierung eine Sendeeinheit aufweisen, die ein Signalisierungssignal abgibt.

12. Funkknotennetz nach einem der Ansprüche 8 bis 11, **gekennzeichnet durch** eine funkgestützte Lokalisierungseinrichtung, die unter Verwendung des Signalisierungssignals das zugeordnete Objekt lokalisiert.

13. Funkknotennetz nach einem der Ansprüche 8 bis 12, **dadurch gekennzeichnet, dass** jeder oder einzelne der Funkknoten (1, 5) eine Sende/Empfangseinheit (3) mit einer im Verhältnis zur Empfangsschaltung (2) höherer Leistungsfähigkeit aufweisen, wobei die Empfangsschaltung (2) als Aufweckempfänger für die Sende/Empfangseinheit dient.

14. Funkknotennetz nach einem der Ansprüche 8 bis 13, **dadurch gekennzeichnet, dass** jeder oder einzelne der Funkknoten (1, 5) eine Sensoranordnung zur Erfassung der vorgegebenen Eigenschaft aufweist.

## Claims

1. Method for the selective detection of at least one object having at least one predefined property from a plurality of objects provided with radio nodes (1, 5), the radio nodes (1, 5) being part of a radio node network and each radio node which is associated with an object comprising an energy-saving receiver circuit (2) comprising a storage device (9) in which one or more activation sequences are stored, in the object having the predefined property at least one activation sequence being a separate activation sequence which is assigned to the predefined property, in the case of a desired detection the separate activation sequence being transmitted by a transmitter (4) with a radio signal which is received by the respective receiver circuit (2) of the radio nodes (1, 5), which circuit tests the received separate activation sequence for compliance using the one or more stored activation sequences and in the case of compliance activates the radio node (1) of the object having the predefined property, **characterised in that** the at least one separate activation sequence for storage in the receiver circuit (2) of the radio node (1, 5) is transmitted with a corresponding identifier by the transmitter (4) or a further transmitter when the radio node or the object associated therewith is to be assigned the predefined property.

2. Method according to claim 1, **characterised in that** the activated radio node(s) (1) are signalled visually and/or acoustically.

3. Method according to either claim 1 or claim 2, **characterised in that** the radio node (1) activated by the at least one predefined activation sequence is located in a radio-based manner.

4. Method according to any of claims 1 to 3, **characterised in that** a plurality of separate activation sequences are stored in the receiver circuit (2) and are assigned different predefined properties.

5. Method according to any of claims 2 to 4, **characterised in that** the visual and/or acoustic signalling is limited in time and/or is ended by re-emission of the activation sequence.

6. Method according to any of claims 1 to 5, **characterised in that** the at least one separate activation sequence for storage in the receiver circuit (2) of the radio node (1, 5) is stored on the basis of signals of a sensor arrangement which detects the predefined property of the object.

7. Method according to any of claims 1 to 6, **characterised in that** the separate activation sequence is stored via a programming operation, the programming operation being triggered via the transmitter (4) by a user or by a central unit which optionally receives radio signals from the radio nodes, the radio signals containing information about the separate property of the objects, which information is supplied by a sensor arrangement which is operatively connected to the objects, or the programming operation being triggered by the sensor arrangement.

8. Radio node network comprising a plurality of radio nodes (1, 5) which are each assigned objects and each comprise an energy-saving receiver circuit (2) and comprising at least one transmitter (4) for emitting activation sequences, the receiver circuit comprising a storage device (9) in which at least one separate activation sequence which is assigned to a predefined property of the object is stored, at least temporarily, and means (10) for establishing the compliance of the separate activation sequence with the transmitted activation sequence, and further the radio node (1, 5) comprising signalling means (6) which are operatively connected to the means (10) for establishing the compliance, the means (10) for establishing the compliance being designed to supply a signal to the signalling means (6) when a compliance of the separate activation sequence stored in the storage device (9) with the transmitted activation sequence can be established, **characterised in that** the transmitter (4) or a further transmitter are designed to transmit with a corresponding identifier the at least one separate activation sequence for storage in the receiver circuit (2) of the radio node when this radio node or the object associated therewith is to be assigned the predefined property.

9. Radio node network according to claim 8, **characterised in that** the transmitter (4) is part of a transmitting/receiving device of a reading and/or programming apparatus.

10. Radio node network according to either claim 8 or claim 9, **characterised in that** the signalling means (6) are designed as visual and/or acoustic indicator means.

11. Radio node network according to any of claims 8 to 10, **characterised in that** the signalling means (6) comprise a transmitting unit which emits a signalling signal.

12. Radio node network according to any of claims 8 to 11, **characterised by** a radio-based locating device which locates the assigned object using the signalling signal.

13. Radio node network according to any of claims 8 to 12, **characterised in that** each or some of the radio nodes (1, 5) comprise a transmitting/receiving unit (3) having a higher power than the receiving circuit (2), the receiving circuit (2) being used as a wake-up receiver for the transmitting/receiving unit.

14. Radio node network according to any of claims 8 to 13, **characterised in that** each or some of the radio nodes (1, 5) comprise a sensor arrangement for detecting the predefined property.

## Revendications

1. Procédé de détection sélective d'au moins un objet avec au moins une propriété donnée parmi une pluralité d'objets munis de noeuds radio (1, 5), lesdits noeuds radio (1, 5) faisant partie intégrante d'un réseau de noeuds radio et chaque noeud radio relié à un objet comportant un circuit de réception (2) à économie de courant avec une mémoire (9), dans laquelle sont stockées une ou plusieurs séquences d'activation, au moins une séquence d'activation associée à l'objet avec la propriété donnée étant une séquence d'activation séparée, qui est associée à la propriété donnée, la séquence d'activation séparée étant envoyée, lorsqu'une détection est souhaitée, par un émetteur (4) avec un signal radio qui est reçu par le circuit de réception (2) correspondant des noeuds radio (1, 5), lequel vérifie la concordance de la séquence d'activation séparée reçue moyennant l'utilisation de l'une ou de plusieurs séquences d'activation mémorisées et, en cas de concordance, active le noeud radio (1) de l'objet avec la propriété donnée, **caractérisé en ce que** ladite au moins une séquence d'activation séparée est envoyée avec un code d'identification correspondant par l'émetteur (4) ou un autre émetteur en vue d'être stockée dans le circuit de réception (2) du noeud radio (1, 5), lorsque la propriété donnée doit être associée au noeud radio ou à l'objet relié à celui-ci.

2. Procédé selon la revendication 1, **caractérisé en ce que** le ou les noeuds radio (1) activés sont signalés par voie optique et/ou acoustique.

3. Procédé selon la revendication 1 ou 2, **caractérisé en ce que** le noeud radio (1), activé par ladite au moins une séquence d'activation donnée, est localisé par radio-assistance.

4. Procédé selon l'une quelconque des revendications 1 à 3, **caractérisé en ce que** plusieurs séquences d'activation séparées sont stockées dans le circuit de réception (2), différentes propriétés données leur étant associées.

5. Procédé selon l'une quelconque des revendications 2 à 4, **caractérisé en ce que** la signalisation optique et/ou acoustique est limitée dans le temps et/ou prend fin lorsque la séquence d'activation est à nouveau envoyée.

6. Procédé selon l'une quelconque des revendications 1 à 5, **caractérisé en ce que** ladite au moins une séquence d'activation séparée, en vue d'être stockée dans le circuit de réception (2) du noeud radio (1, 5), est stockée en fonction des signaux d'un système de détection qui détecte la propriété donnée de l'objet.

7. Procédé selon l'une quelconque des revendications 1 à 6, **caractérisé en ce que** la séquence d'activation séparée est stockée par l'intermédiaire d'un processus de programmation, ledit processus de programmation étant déclenché via l'émetteur (4) par un utilisateur ou par une unité centrale, qui reçoit, le cas échéant, des signaux radio des noeuds radio, lesdits signaux radio contenant des informations sur les propriétés données des objets, lesquelles sont fournies par un système de détection qui est en liaison fonctionnelle avec les objets, ou le processus de programmation étant déclenché par le système de détection.

8. Réseau de noeuds radio comportant une pluralité de noeuds radio (1, 5), qui sont associés chacun à des objets et comportent chacun un circuit de réception (2) à économie de courant, et comportant au moins un émetteur (4) destiné à émettre des séquences d'activation, ledit circuit de réception comportant une mémoire (9), dans laquelle est stockée au moins périodiquement au moins une séquence d'activation séparée qui est associée à une propriété donnée de l'objet, et des moyens (10) destinés à déceler la concordance entre la séquence d'activation séparée et la séquence d'activation envoyée, et, en outre, le noeud radio (1, 5) comprend des moyens (6) de signalisation qui coopèrent avec les moyens (10) destinés à déceler la concordance, lesdits moyens (10) destinés à déceler la concordance étant réalisés pour délivrer un signal aux moyens (6) de signalisation lorsqu'une concordance peut être décelée entre la séquence d'activation séparée, stockée dans la mémoire (9), et la séquence d'activation envoyée, **caractérisé en ce que** l'émetteur (4) ou un autre émetteur sont configurés pour émettre avec un code d'identification correspondant ladite au moins une séquence d'activation séparée en vue de la stocker dans le circuit de réception (2) du noeud radio, lorsque la propriété donnée doit être associée à ce noeud radio ou à l'objet relié à celui-ci.

9. Réseau de noeuds radio selon la revendication 8, **caractérisé en ce que** l'émetteur (4) fait partie intégrante d'un dispositif d'émission/réception d'un dispositif de lecture et/ou de programmation.

10. Réseau de noeuds radio selon la revendication 8 ou 9, **caractérisé en ce que** les moyens (6) de signalisation sont configurés sous forme de témoins optiques et/ou acoustiques.

11. Réseau de noeuds radio selon l'une quelconque des revendications 8 à 10, **caractérisé en ce que** les moyens (6) de signalisation comportent une unité émettrice qui délivre un signal de signalisation.

12. Réseau de noeuds radio selon l'une quelconque des revendications 8 à 11, **caractérisé par** un dispositif de localisation radio-assisté qui, moyennant l'utilisation du signal de signalisation, localise l'objet associé.

13. Réseau de noeuds radio selon l'une quelconque des revendications 8 à 12, **caractérisé en ce que** chaque ou certains des noeuds radio (1, 5) comportent une unité d'émission/réception (3) avec une capacité plus élevée que le circuit de réception (2), ledit circuit de réception (2) étant utilisé comme récepteur de réveil pour l'unité d'émission/réception.

14. Réseau de noeuds radio selon l'une quelconque des revendications 8 à 13, **caractérisé en ce que** chaque ou certains des noeuds radio (1, 5) comportent un système de détection destiné à détecter la propriété donnée.
